# FASCICULE DE BREVET EUROPEEN

(11) **EP 3 231 729 B1**
(45) Date de publication et mention de la délivrance du brevet: **26.09.2018**
(21) Numéro de dépôt: 17165163.1
(22) Date de dépôt: 06.04.2017
(51) Int. Cl.: B65D 63/10

(54) **COLLIER DE SERRAGE**
SCHLAUCHKLEMME
CLAMPING COLLAR

(30) Priorité: 15.04.2016 FR 1653365
(43) Date de publication de la demande: 18.10.2017
(73) Titulaire: SES-Sterling Industrie-Holding AG, 4115 Mariastein (CH)
(72) Inventeur: ROLLIER, Daniel, 4132 MUTTENZ (CH)
(74) Mandataire: Koelbel, Caroline

(56) Documents cités:
- EP-A1- 1 818 275
- WO-A1-2009/001079
- FR-A- 1 168 600
- US-A1- 2002 083 559

## Description

### Domaine technique :

La présente invention concerne un collier de serrage comportant une bande de matière flexible allongée, pourvue d'une première face et d'une seconde face opposées, ladite première face comportant une portion crantée, ledit collier de serrage comportant, à une première extrémité de la bande de matière, une tête de fixation qui comporte une première ouverture munie d'un cliquet et qui est saillante par rapport à l'axe longitudinal de la bande de matière, et à une seconde extrémité de la bande de matière un élément d'insertion qui est libre et agencé pour être introduit dans ladite tête de fixation, la première ouverture traversant longitudinalement ladite tête de fixation entre une entrée débouchant à une extrémité libre de la tête de fixation et une sortie débouchant en direction d'une zone de jonction entre la bande de matière et la tête de fixation, collier de serrage dans lequel, dans une position de serrage dudit collier de serrage, ladite bande de matière traverse la première ouverture de la tête de fixation de ladite entrée vers ladite sortie pour que la bande de matière forme une boucle fermée, et la portion crantée de la première face de la bande de matière coopère avec le cliquet de la tête de fixation pour autoriser le mouvement de la portion crantée par rapport à la première ouverture dans un unique sens et interdire son mouvement dans un sens opposé, ladite tête de fixation comportant en outre une seconde ouverture qui la traverse transversalement, disposée entre la zone de jonction et la première ouverture, de sorte qu'en position de serrage dudit collier de serrage, la sortie de la première ouverture débouche à l'intérieur de la boucle et vers la seconde ouverture.

### Technique antérieure :

On connaît déjà des colliers de serrage qui sont utilisés pour attacher ensemble un faisceau de câbles et qui ont la particularité d'être autobloquants. De tels colliers de serrage se présentent, en général, sous la forme d'une bande de matière flexible, le plus souvent en plastique, qui comporte à une première extrémité une tête de fixation munie d'une seule ouverture pouvant être longitudinale ou transversale permettant de recevoir une seconde extrémité de la bande de matière qui est libre. La bande de matière est crantée sur une de ses faces ou sur ses deux faces et l'ouverture de la tête de fixation comporte un cliquet. Il en résulte que, lorsque la seconde extrémité de la bande de matière est insérée dans l'ouverture de la tête de fixation, la bande de matière est fermée en forme de boucle, et au moins un des crans de la face crantée de la bande de matière et le cliquet s'engrènent pour verrouiller le collier de serrage. Par conséquent, le mouvement de la bande de matière par rapport à l'ouverture de la tête de fixation n'est autorisé que selon un unique sens. En effet, lorsque l'on tire sur la seconde extrémité de la bande de matière, la boucle formée se rétrécit et il n'est plus possible d'agrandir la boucle. Ce type de collier est donc particulièrement intéressant pour attacher un faisceau de câbles. Toutefois, lorsque la boucle est formée, la tête de fixation du collier de serrage est saillante à l'extérieur de la boucle et il est nécessaire que la seconde extrémité de la bande de matière soit saillante à l'extérieur de la boucle pour faciliter l'ajustement de la taille de la boucle en tirant sur la seconde extrémité de la bande. C'est pourquoi, l'ouverture de la tête de fixation débouche à l'extérieur de la boucle. Le plus souvent lorsque le faisceau de câbles est attaché, l'on coupe la seconde extrémité et la partie correspondante de la bande de matière qui fait saillie à l'extérieur de la boucle pour réduire l'encombrement du collier. Néanmoins, la tête de fixation reste saillante à l'extérieur de la boucle et dans certaines conditions, sa présence est problématique. Notamment, lorsqu'on est en présence de plusieurs faisceaux de câbles, où les têtes de fixation en saillie peuvent causer des dommages aux câbles environnants par écrasement des isolants. Les publications WO 2009/001079 A1 et EP 1 818 275 A1 illustrent ce type de collier de serrage pourvu d'une seule ouverture traversant la tête de fixation dans le sens longitudinal de la bande de matière.

La publication EP 1 818 275 A1 décrit un collier de serrage dont la tête de fixation est plate dans le prolongement de la bande de matière, et comporte deux fentes transversales et parallèles entre-elles dans lesquelles est introduite successivement l'extrémité libre de la bande de matière évitant ainsi toute surépaisseur à l'extérieur de la boucle dans sa position de serrage. Toutefois, cette solution est délicate à mettre à oeuvre et consommatrice de temps puisqu'elle nécessite pour fermer le collier de serrage en boucle autour d'un faisceau de câbles d'enfiler l'extrémité libre de la bande de matière d'abord dans la première fente de l'extérieur vers l'intérieur du faisceau puis dans la seconde fente de l'intérieur vers l'extérieur du faisceau.

La publication US 2002/083559 A1 correspond au préambule de la revendication 1 et propose un collier de serrage dans lequel la tête de fixation comporte une première ouverture qui la traverse dans le sens longitudinal, suivie d'une seconde ouverture qui la traverse dans le sens transversal et comportant obligatoirement une rampe inclinée permettant de dévier l'extrémité libre de la bande de matière vers l'extérieur de la boucle lorsque le collier de serrage est fermé en boucle. De ce fait, la structure de ce type de collier de serrage est complexe et ne garantit pas nécessairement la sortie de l'extrémité libre vers l'extérieur en fonction du diamètre de la boucle.

Pour ces raisons, les solutions de l'art antérieur ne sont pas satisfaisantes.

### Exposé de l'invention :

La présente invention vise à pallier ces inconvénients en proposant un collier de serrage dont la structure est simplifiée et dont l'encombrement est optimisé de sorte que la tête de fixation présente un encombrement réduit à l'extérieur de la boucle en position de serrage, tout en garantissant un guidage de l'extrémité libre de la bande de matière vers l'extérieur de la boucle lorsque le collier de serrage est fermé en boucle et ce quel que soit le diamètre de la boucle.

Dans ce but, l'invention concerne un collier de serrage selon la revendication 1.

L'ajout d'une seconde ouverture permet de concevoir un collier de serrage ayant une tête de fixation faisant principalement saillie à l'intérieur de la boucle en position de serrage. En effet, la seconde ouverture permet de faire passer l'extrémité libre de la bande de matière de l'intérieur de la boucle à l'extérieur de la boucle en position de serrage. En outre, l'angle d'inclinaison donné à la portion saillante de la tête de fixation et par conséquent à la première ouverture permet de guider naturellement et automatiquement l'extrémité libre au travers de la seconde ouverture vers l'extérieur de la boucle.

De préférence, la sortie de la première ouverture débouche dans la seconde ouverture. La portion saillante de la tête de fixation peut comporter une première paroi externe inclinée et située du côté de l'une des première ou seconde faces, de sorte qu'en position de serrage, la première paroi externe peut être située à l'extérieur de la boucle et épouser sensiblement la forme de la boucle.

Dans ce cas, la portion saillante de la tête de fixation peut comporter une seconde paroi externe, opposée à la première paroi externe, orientée vers l'autre des première et seconde faces de la bande de matière, de sorte qu'en position de serrage la seconde paroi externe peut faire saillie à l'intérieur de la boucle.

Dans une forme de réalisation préférée, la paroi interne de la première ouverture comporte ledit cliquet.

De façon avantageuse, la tête de fixation comporte une portion plane disposée entre la zone de jonction et la portion saillante, dans le plan de la bande de matière et dans laquelle est ménagée la seconde ouverture.

Avantageusement, ledit élément d'insertion comporte une portion inclinée, qui est inclinée d'un angle obtus par rapport à l'axe longitudinal de la bande de matière et orientée vers la première face ou la seconde face opposée à la première face de la bande de matière.

De façon préférentielle, la première ouverture formant le canal de guidage est un canal rectiligne.

Selon un mode de réalisation de l'invention, le cliquet est disposé du côté de la première paroi externe de la portion saillante, et la portion saillante de la tête de fixation comporte une fente longitudinale, qui s'étend sur la seconde paroi externe, qui est centrée par rapport à la première ouverture, ouvrant longitudinalement la première ouverture et débouchant par une embouchure dans la première ouverture. Dans ce cas, ledit élément d'insertion présente préférentiellement une largeur amincie par rapport à la largeur de la bande de matière, la largeur dudit élément d'insertion, étant inférieure ou égale à la largeur de la fente pour pouvoir être introduit dans la première ouverture de la tête de fixation à travers ladite fente.

La première ouverture peut être munie au niveau de sa paroi interne de deux surépaisseurs disposées de part et d'autre de ladite embouchure de la fente et formant deux rainures.

Et la bande de matière peut comporter deux lèvres qui s'étendent le long des bords de la bande de matière pour coopérer avec les deux rainures de la première ouverture en position de serrage.

Dans la forme de réalisation préférée, la seconde face de la bande de matière est une face plane. Selon une autre variante de réalisation, la seconde face de la bande de matière peut comporter une portion crantée agencée pour coopérer avec un second cliquet disposé sur la paroi externe de la première ouverture en regard du premier cliquet.

Avantageusement, le cliquet peut être disposé du côté de la première paroi externe de la portion saillante de sorte à ménager à une extrémité libre dudit cliquet un espace d'insertion permettant le démontage dudit collier de serrage.

En position de serrage, une extrémité coupée de la bande de matière obtenue après découpe, peut être avantageusement logée dans la seconde ouverture pour ne pas faire saillie à l'extérieur de la boucle.

### Description sommaire des dessins :

La présente invention et ses avantages apparaîtront mieux dans la description suivante de plusieurs modes de réalisation donnés à titre d'exemples non limitatifs, en référence aux dessins annexés, dans lesquels:
- la figure 1 représente une vue en perspective d'un collier de serrage selon une première variante de réalisation de l'invention,
- la figure 1A est une vue en perspective du détail A de la figure 1, illustrant la tête de fixation du collier de serrage,
- la figure 2 est une vue de dessus du collier de serrage de la figure 1,
- la figure 3 est une vue de dessous du collier de serrage de la figure 1,
- la figure 4 est une vue de côté du collier de serrage de la figure 1,
- la figure 5 est une coupe longitudinale du collier de serrage de la figure 1,
- la figure 6 est une vue en perspective du collier de serrage de la figure 1 fermé en boucle en position de serrage,
- la figure 7 est une coupe longitudinale du collier de serrage de la figure 6,
- la figure 8 est une vue en perspective du collier de serrage de la figure 6 liant une pluralité de câbles et dont une portion de la bande de matière et la seconde extrémité de la bande de matière sont coupées,
- la figure 9 représente une vue en perspective d'un collier de serrage selon une deuxième variante de réalisation de l'invention,
- la figure 9A est une vue en perspective du détail A de la figure 9, illustrant la tête de fixation du collier de serrage,
- la figure 10 est une vue de dessus du collier de serrage de la figure 9,
- la figure 11 est une vue en perspective du collier de serrage de la figure 9 fermé en boucle en position de serrage et dont une portion de la bande de matière et la seconde extrémité de la bande de matière sont coupées,
- la figure 12 représente une vue en perspective d'un collier de serrage selon une troisième variante de réalisation de l'invention,
- la figure 12A est une vue en perspective du détail A de la figure 12, illustrant la tête de fixation du collier de serrage,
- la figure 13 est une vue de dessus du collier de serrage de la figure 12,
- la figure 14 est une vue en perspective du collier de serrage selon une quatrième variante de réalisation de l'invention,
- la figure 14A est une vue en perspective du détail A de la figure 14, illustrant la tête de fixation du collier de serrage,
- la figure 15 est une coupe longitudinale du collier de serrage de la figure 14,
- la figure 16 est une coupe longitudinale du collier de serrage de la figure 14 fermé en boucle en position de serrage,
- la figure 17 est une vue en perspective du collier de serrage de la figure 14 fermé en boucle en position de serrage,
- la figure 18 est une vue en perspective du collier de serrage selon une cinquième variante de réalisation de l'invention,
- la figure 19 est une coupe longitudinale du collier de serrage de la figure 18,
- la figure 20 est une vue en perspective du collier de serrage de la figure 18 fermé en boucle en position de serrage, et
- la figure 21 est une coupe longitudinale du collier de serrage de la figure 20.

### Illustrations et différentes manières de réaliser l'invention :

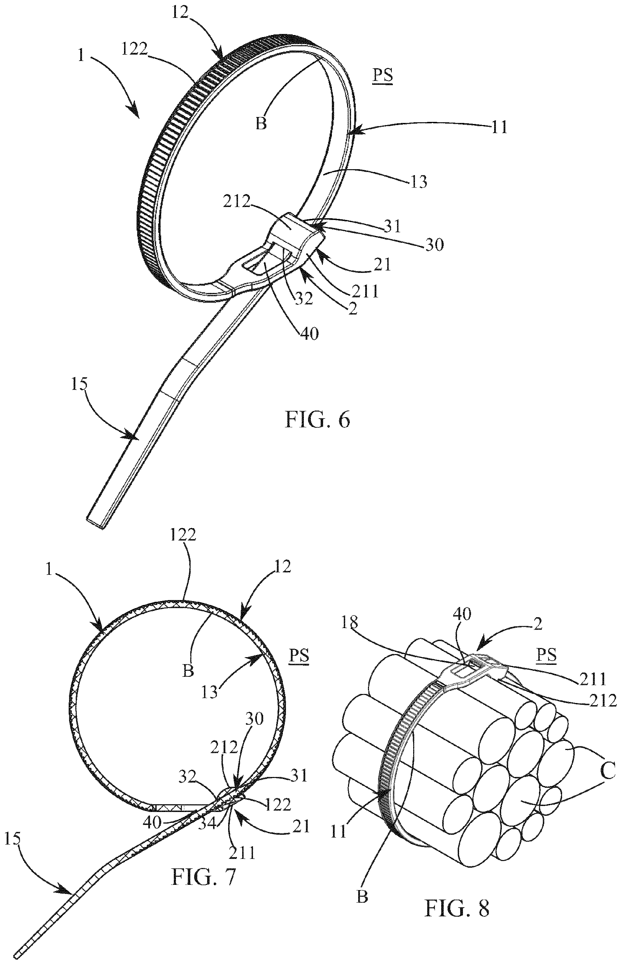

En référence aux figures, l'invention concerne un collier de serrage 1, 100, 110, 120, 130 pour lier un élément ou une pluralité d'éléments entre eux, et notamment des câbles C (fig. 8). Les colliers de serrage 1, 100, 110, 120, 130 décrits sont destinés à être fermés pour former des boucles B en position de serrage PS.

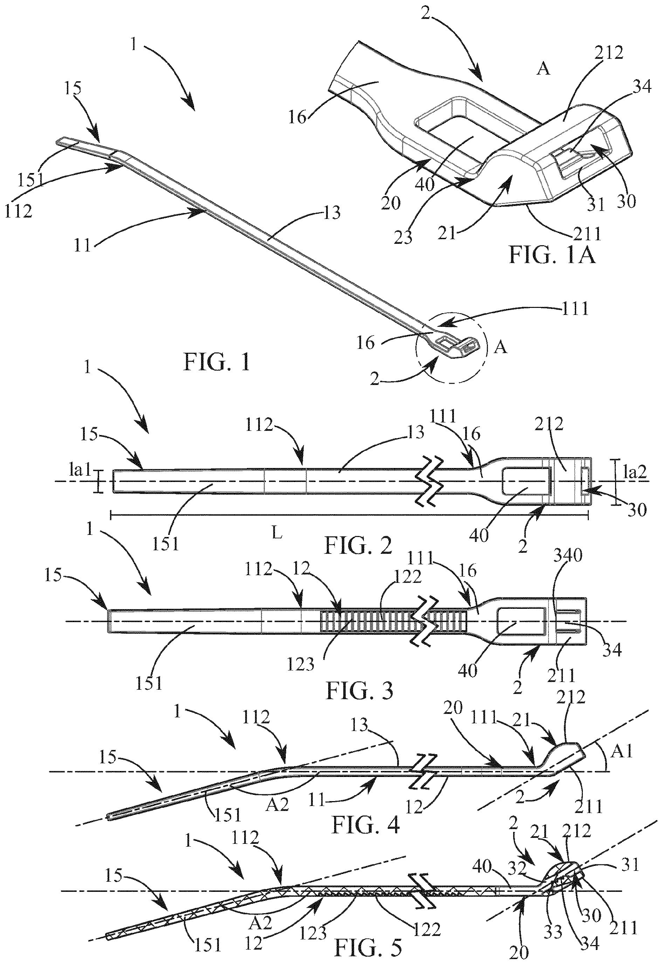

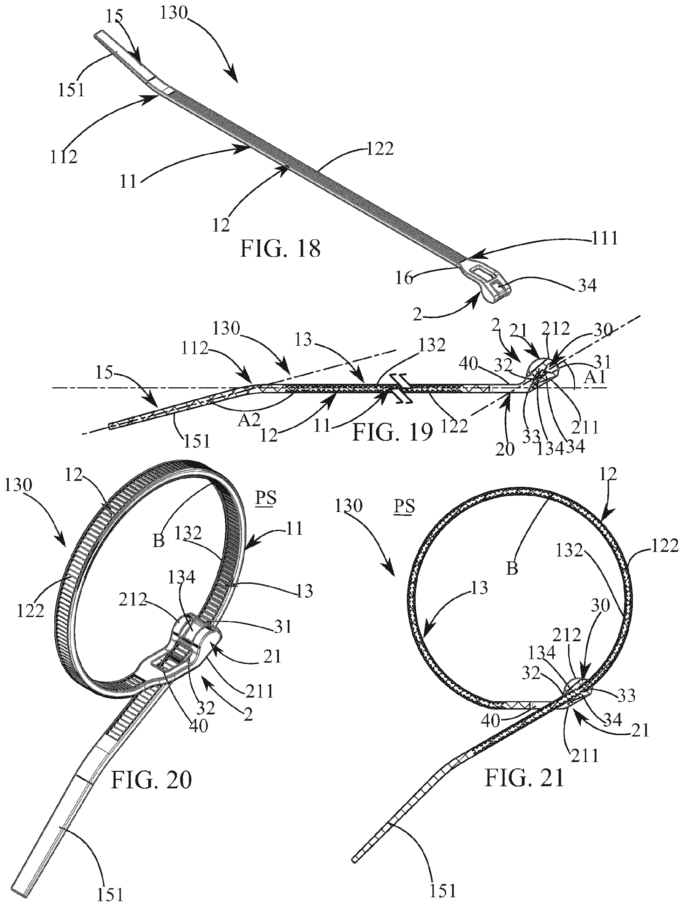

Selon une première variante de réalisation, illustrée aux figures 1 à 8, le collier de serrage 1 est un élément allongé de longueur L, qui comporte une bande de matière 11 de largeur la1 qui est flexible et de forme sensiblement plane, présentant une première face 12 comportant une portion crantée 122 munie d'une pluralité de dents 123 agencée pour coopérer avec un cliquet 34, décrit plus loin, et une seconde face 13 opposée à la première face 12 qui est sensiblement lisse, sans que cet exemple ne soit limitatif. En effet, la seconde face 13 qui est opposée à la première face 12 pourrait également comporter une portion crantée munie d'une pluralité de dents, agencée pour coopérer avec un cliquet additionnel, conformément à la variante illustrée dans les figures 18 à 21.

Le collier de serrage 1 comporte à une première extrémité 111 de la bande de matière 11 une tête de fixation 2 et comporte à une seconde extrémité 112 de la bande de matière 11 opposée un élément d'insertion 15 qui est libre et destiné à être inséré dans la tête de fixation 2. L'élément d'insertion 15 comporte une portion inclinée 151 qui est inclinée d'un angle A2 obtus par rapport à l'axe longitudinal de la bande de matière 11 et orientée vers la première face 12 de la bande de matière 11. L'introduction de l'élément d'insertion 15 dans la tête de fixation 2 est ainsi facilitée. De préférence, l'élément d'insertion 15 présente une largeur sensiblement égale à la largeur la1 de la bande de matière 11. Toutefois, il peut également comporter une largeur variable, comme expliqué plus loin.

De préférence, le collier de serrage 1 est constitué d'une matière synthétique, telle que du polyamide ou du polyétheréthercétone, à titre d'exemples non limitatifs. La matière synthétique est choisie de préférence pour résister à des températures comprises entre -80°C et 270°C. La matière synthétique peut également présenter plus spécifiquement des propriétés de résistances aux hautes températures en fonction des applications visées et notamment entre 80°C et 270°C. Le polyétheréthercétone présente l'avantage d'être résistant jusqu'à une température sensiblement égale à 250°C. Bien entendu, ces exemples ne sont pas limitatifs.

Comme l'illustrent les figures 1 à 3, la tête de fixation 2 est reliée à la bande de matière 11 par une zone de jonction 16, et présente une largeur la2 qui est supérieure à la largeur la1 de la bande de matière 11.

La tête de fixation 2, telle qu'illustrée à la figure 1A, comporte une portion plane 20 et une portion saillante 21. La portion saillante 21 est disposée à l'extrémité libre de la tête de fixation 2 et la portion plane 20 est disposée entre la zone de jonction 16 et la portion saillante 21.

Plus particulièrement et comme illustré à la figure 4, la portion plane 20 de la tête de fixation 2 est dans le plan de la bande de matière 11. A l'inverse, la portion saillante 21 de la tête de fixation 2 fait saillie par rapport à l'axe longitudinal de la bande de matière 11 vers la seconde face 13. En effet, la portion saillante 21 est inclinée d'un angle A1 aigu par rapport à l'axe longitudinal de la bande de matière 11. Il en résulte que l'axe longitudinal de la portion saillante 21 est incliné par rapport à l'axe longitudinal de la bande de matière 11 de l'angle A1. La portion saillante 21 présente une première paroi externe 211 orientée du côté de la première face 12 et qui est inclinée selon l'angle A1 par rapport à la première face 12, et une seconde paroi externe 212 orientée du côté de la seconde face 13. Dans l'exemple illustré, la première paroi 211 présente une forme plane, tandis que la seconde paroi 212 présente une forme arrondie, sans que ces formes ne soient limitatives. La jonction 23 entre la portion plane 20 et la seconde paroi externe 212 de la portion saillante 21 peut, selon une variante non représentée, être renforcée par ajout de matière, de sorte à former une ou plusieurs surépaisseurs ou nervures de renfort. Ceci est particulièrement avantageux pour éviter que la tête de fixation 2 ne se plie, notamment lorsque la boucle B du collier de serrage est très rétrécie en position de serrage PS. En effet, lorsqu'un faisceau de câbles C présente un diamètre réduit, la boucle B du collier de serrage 1 qui est obtenue présente également un diamètre réduit qui tend à plier la jonction 23. L'ajout de matière au niveau de la jonction 23 permet d'éviter de fragiliser la fixation.

La portion saillante 21 de la tête de fixation 2 comporte une première ouverture 30 qui est traversante et s'étend le long de l'axe longitudinal de la portion saillante 21, comme le représentent notamment les figures 1A et 5. La première ouverture 30 forme un canal de guidage qui présente une entrée 31 par laquelle l'élément d'insertion 15 du collier de serrage 1 peut être inséré et une sortie 32 par laquelle l'élément d'insertion 15 du collier de serrage 1 peut ressortir. L'entrée 31 est disposée à l'extrémité libre de la tête de fixation 2 et la sortie 32 débouche en direction de la portion plane 20. La première ouverture 30 présente une paroi interne 33 qui est inclinée selon l'axe longitudinal de la paroi saillante 21 et qui forme le canal de guidage pour guider l'élément d'insertion 15 du collier de serrage 1 vers une seconde ouverture 40 décrite ci-dessous. De plus, la paroi interne 33 comporte un cliquet 34 qui est destiné à coopérer avec la portion crantée 122 de la première face 12 de la bande de matière 11. Plus particulièrement, le cliquet 34 est disposé du côté de la première paroi externe 211. De plus, le cliquet 34 peut être disposé sur la paroi externe 211 de sorte à ménager à son extrémité libre un espace 340 pour insérer un outil permettant de soulever le cliquet 34 pour libérer la bande de matière 11, afin de faciliter le desserrage du collier de fixation 1. Cette espace 340 est accessible en position de serrage PS de l'extérieur de la boucle B.

Comme l'illustrent notamment les figures 1 à 3, la portion plane 20 de la tête de fixation 2 comporte une seconde ouverture 40 qui la traverse transversalement. Il en résulte avantageusement que la sortie 32 de la première ouverture 30 débouche dans la seconde ouverture 40, comme le montre la figure 5.

Les figures 6 à 7 illustrent le collier de serrage 1 selon la première variante de réalisation qui vient d'être décrite, en position de serrage PS. Pour passer de la position initiale, dans laquelle le collier de serrage 1 est ouvert et décrite ci-dessus à la position de serrage PS, dans laquelle le collier de serrage 1 est fermé en forme de boucle B, l'on insère l'élément d'insertion 15 du collier de serrage 1 dans la tête de fixation 2. Plus précisément, l'élément d'insertion 15 du collier de serrage 1, traverse la première ouverture 30 de l'entrée 31 vers la sortie 32, puis débouche dans la seconde ouverture 40 et la traverse. L'on tire sur l'élément d'insertion 15 du collier de serrage 1, jusqu'à ce que le cliquet 34 de la première ouverture 30 engage la portion crantée 122 de la première face 12 de la bande de matière 11. Le mouvement de la portion crantée 122 de la bande de matière 11 par rapport à la première ouverture 30 peut ainsi s'effectuer dans un unique sens, c'est-à-dire dans le sens de la force de traction exercée sur l'élément d'insertion 15 du collier de serrage 1, tout mouvement dans le sens opposé étant ainsi interdit. En outre, le collier de serrage 1 forme une boucle B fermée, dont la portion crantée 122 de la première face 12 est disposée à l'extérieur de la boucle B et dont la seconde face 13 est disposée à l'intérieur de la boucle B. Avantageusement, la disposition de la première face 12 qui est crantée à l'extérieur de la boucle B évite de marquer l'isolant des câbles C, lorsque des câbles C sont enserrés dans la boucle B.

Il en résulte que la bande de matière 11 traverse la première ouverture 30 de la tête de fixation 2 de l'entrée 31 vers la sortie 32, ainsi que la seconde ouverture 40 vers l'extérieur de la boucle B. Ceci est rendu possible par la forme de la première ouverture 30 qui est configurée pour guider naturellement et automatiquement l'élément d'insertion 15 du collier de serrage 1 vers la seconde ouverture 40. En effet, l'inclinaison de la première ouverture 30 forme un canal de guidage pour l'élément d'insertion 15 du collier de serrage 1, ou pour une portion correspondante de la bande de matière 11. De préférence, et comme illustré, le canal de guidage est un canal rectiligne. De plus, la sortie 32 de ce canal de guidage débouche à l'intérieur de la boucle B et vers ou directement dans la seconde ouverture 40 de sorte que l'élément d'insertion 15 traverse cette seconde ouverture 40 pour sortir à l'extérieur de la boucle B. Avantageusement, la première paroi externe 211 de la portion saillante 21 de la tête de fixation 2 épouse la forme de la boucle B. Avantageusement, la seconde paroi externe 212 de la portion saillante 21 de la tête de fixation 2 est saillante à l'intérieur de la boucle B. Il en résulte que l'encombrement de la tête de fixation 2 à l'extérieur de la boucle B est réduit. La forme arrondie de la seconde paroi externe 212 contribue également à limiter l'encombrement à l'intérieur de la boucle B et à ne pas endommager les câbles C disposés à l'intérieur de la boucle B. Par conséquent, seul l'élément d'insertion 15 du collier de serrage 1, et une portion de la bande de matière 11 font saillie à l'extérieur de la boucle B. Toutefois, elles peuvent être coupées à l'aide d'un outil adéquat comme l'illustre la figure 8. En effet, l'élément d'insertion 15 du collier de serrage 1, et une portion de la bande matière 11 saillante à l'extérieur de la boucle B peuvent être coupés avec un outil adéquat afin que l'extrémité coupée 18 de la bande de matière 11 obtenue après découpe soit uniquement logée dans la seconde ouverture 40 et ne fasse pas saillie à l'extérieur de la boucle B.

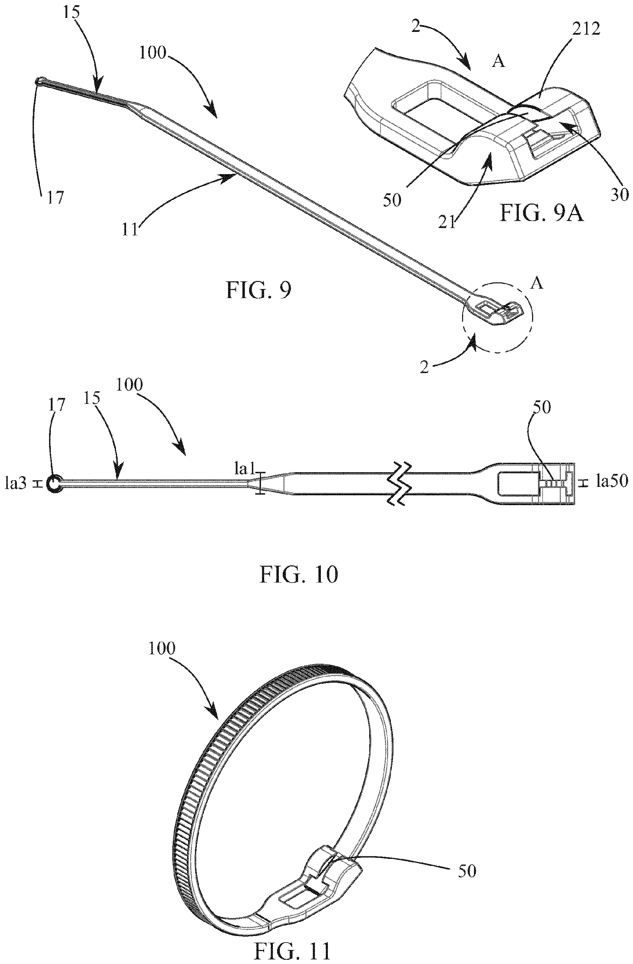

Selon une deuxième variante de l'invention illustrée aux figures 9 à 11, le collier de serrage 100 diffère du collier de serrage 1 décrit précédemment par la forme de la portion saillante 21 de la tête de fixation 2 et par la forme de l'élément d'insertion 15 du collier de serrage 100. En effet, la portion saillante 21 de la tête de fixation 2 comporte une fente 50 longitudinale qui s'étend sur la seconde paroi externe 212. En outre, la fente 50 est centrée par rapport à la première ouverture 30 et s'étend le long de celle-ci et débouche dans celle-ci. La fente 50 présente une largeur la50 qui est inférieure à la largeur de la première ouverture 30. En outre, l'élément d'insertion 15 du collier de serrage 100 présente une largeur la3 amincie par rapport à la largeur la1 de la bande de matière 11 et terminée par une tête de préhension 17. La largeur la50 de la fente 50 est légèrement supérieure à la largeur la3 de l'élément d'insertion 15 du collier de serrage 100. Cette configuration permet d'insérer l'élément d'insertion 15 du collier de serrage 100 dans la tête de fixation 2 à travers la fente 50. L'introduction de l'élément d'insertion 15 du collier de serrage 100 dans la tête de fixation 2 est plus rapide et plus facile que dans la première variante de réalisation décrite précédemment.

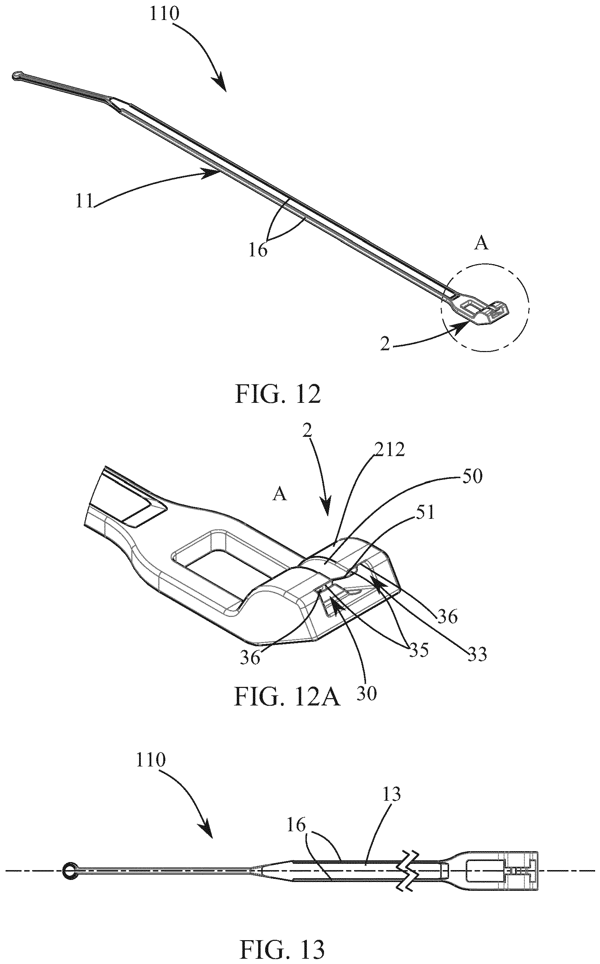

Selon une troisième variante de l'invention illustrée aux figures 12 à 13, le collier de serrage 110 diffère du collier de serrage 100 décrit précédemment par la forme de la première ouverture 30 et par la forme de la bande de matière 11. La seconde face 13 de la bande de matière 11 comporte deux lèvres 16 qui s'étendent le long des bords de la bande de matière 11. En outre, comme illustré à la figure 12A, la première ouverture 30 est munie au niveau de la paroi interne 33 du côté de la seconde paroi externe 212 de deux surépaisseurs 35 disposées à l'embouchure 51 de la fente 50. Les deux surépaisseurs 35 délimitent avec la paroi interne 33 deux rainures 36 parallèles, dans lesquelles les lèvres 16 de la bande de matière 11 peuvent être insérées et coulisser. Cette configuration permet de renforcer la tenue latérale de la tête de fixation 2. Selon une variante non représentée, la seconde face 13 de la bande de matière 11 peut également comporter en plus des deux lèvres 16, une languette d'appui qui est centrée sur la seconde face 13. Avantageusement, cette languette d'appui permet d'augmenter la surface d'appui sur les câbles et de réduire l'effet de pénétration du collier de serrage 110 dans l'isolation des câbles.

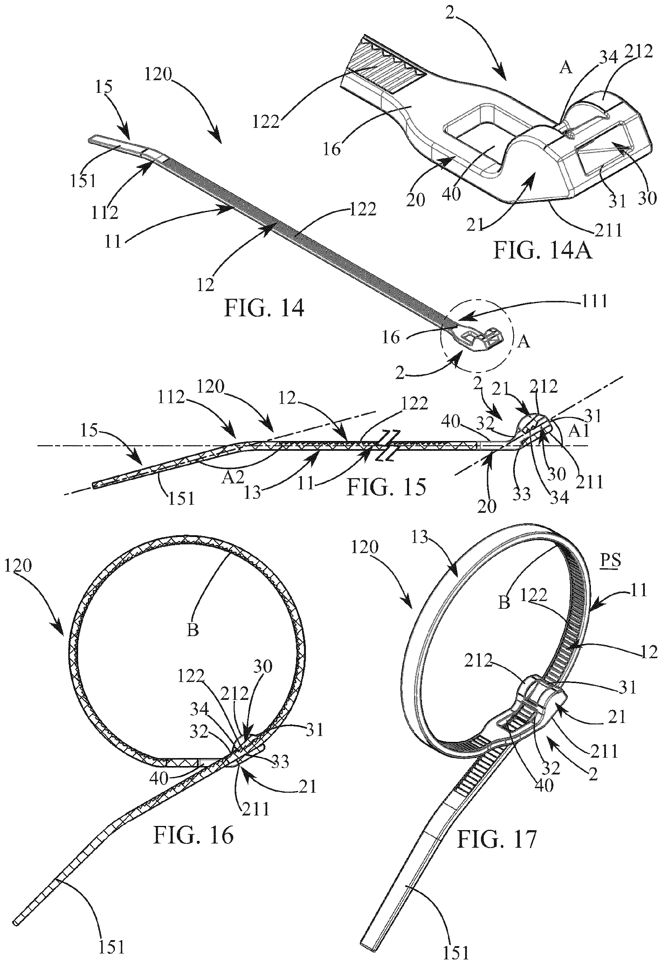

Selon une quatrième variante de l'invention illustrée aux figures 14 à 17, le collier de serrage 120 diffère du collier de serrage 1 selon la première variante décrite précédemment par la position relative de la portion saillante 21 de la tête de fixation 2 par rapport à la première face 12, qui est crantée, et à la seconde face 13, qui est lisse, de la bande de matière 11. En effet, la portion saillante 21 de la tête de fixation 2 fait saillie par rapport à l'axe longitudinal de la bande de matière 11 vers la première face 12 et non pas vers la seconde face 13, comme c'est le cas dans la première variante (cf. Figures 1 à 8) et est inclinée d'un angle A1 aigu par rapport à l'axe longitudinal de la bande de matière 11, comme l'illustre la figure 15. La portion saillante 21 présente une première paroi externe 211 orientée du côté de la seconde face 13 et qui est inclinée selon l'angle A1 par rapport à la seconde face 13, et une seconde paroi externe 212 orientée du côté de la première face 12. De plus, dans cette quatrième variante, le cliquet 34 est disposé sur la paroi interne 33 du côté de la seconde paroi externe 212. Dans l'exemple illustré, la première paroi 211 présente une forme plane, tandis que la seconde paroi externe 212 présente une forme arrondie, sans que ces formes ne soient limitatives. Il en résulte en position de serrage PS que le collier de serrage 120 forme une boucle B fermée, dont la première face 12 est disposée à l'intérieur de la boucle B et dont la seconde face 13 est disposée à l'extérieur de la boucle B. A l'inverse dans la première variante de réalisation, la portion crantée 122 de la première face 12 est disposée à l'extérieur de la boucle B et la seconde face 13 est disposée à l'intérieur de la boucle B. Avantageusement et conformément à cette quatrième variante de réalisation, la disposition de la seconde face 13 qui est lisse à l'extérieur de la boucle B facilite le nettoyage du collier de serrage 120 et évite la création de zones d'accrochage.

Selon une cinquième variante représentée aux figures 18 à 21, le collier de serrage 130 diffère de la première variante en ce que la seconde face 13 comporte également une portion crantée 132. Il en résulte que la première face 12 et la seconde face 13 de la bande de matière 11 sont crantées. En outre, la tête de fixation 2 comporte deux cliquets 34, 134, un premier cliquet 34 est destiné à coopérer avec la portion crantée 122 de la première face 12 et un second cliquet 134 est destiné à coopérer avec la portion crantée 132 de la seconde face 13. Dans ce cas le premier cliquet 34 est disposé sur la paroi interne 33 du côté de la première paroi externe 211 et le second cliquet 134 est disposé sur la paroi interne 33 du côté de la seconde paroi externe 212. Le premier cliquet 34 et le second cliquet 134 sont disposés en regard l'un de l'autre. Avantageusement, le fait que la première face 12 et la seconde face 13 comportent chacune une portion crantée 122 et 132 et que la tête de fixation 2 soit munie de deux cliquets 34 et 134 permet d'accroître la résistance de la fixation. Il en résulte qu'en position de serrage la résistance de la fixation est améliorée. En outre, cette forme de réalisation permet de prévoir des portions crantées 122, 132 ayant des dents dont la profondeur est inférieure par rapport à celle des variantes avec un unique cliquet.

Selon une variante non représentée, l'élément d'insertion du collier de serrage selon les deuxième et troisième variantes peut présenter une largeur variable. L'élément d'insertion peut par exemple comporter une première portion de largeur rétrécie par rapport à la largeur de la bande de matière et une seconde portion extrémale dont la largeur est sensiblement égale à la largeur de la bande de matière. Cette variante permet de placer le collier de serrage en position de pré-montage en insérant la seconde portion extrémale dans la tête de fixation, sans verrouiller le collier de serrage. Le collier de serrage forme dans cette position une boucle qui n'est pas verrouillée, du fait que le cliquet n'est pas engagé dans la portion crantée. Avantageusement, cette fonctionnalité permet de rouvrir la boucle, par exemple, pour rajouter des câbles avant le verrouillage définitif du collier de serrage.

Il ressort clairement de cette description que l'invention permet d'atteindre les buts fixés, à savoir réduire l'encombrement de la tête de fixation 2 d'un collier de serrage 1, 100, 110, 120, 130 et de supprimer tout dépassement d'extrémités saillantes à l'extérieur de la boucle B.

La présente invention trouvera une application particulière pour enserrer des éléments allongés, tels que des câbles C, comme l'illustre particulièrement la figure 8.

## Revendications

1. Collier de serrage (1, 100, 110, 120, 130) comportant une bande de matière (11) flexible allongée, pourvue d'une première face (12) et d'une seconde face (13) opposées, ladite première face (12) comportant une portion crantée (122), ledit collier de serrage (1, 100, 110, 120, 130) comportant, à une première extrémité (111) de la bande de matière (11), une tête de fixation (2) qui comporte une première ouverture (30) munie d'un cliquet (34) et qui est saillante par rapport à l'axe longitudinal de la bande de matière (11), et à une seconde extrémité (112) de la bande de matière (11) un élément d'insertion (15) qui est libre et agencé pour être introduit dans ladite tête de fixation (2), la première ouverture (30) traversant longitudinalement ladite tête de fixation (2) entre une entrée (31) débouchant à une extrémité libre de la tête de fixation (2) et une sortie (32) débouchant en direction d'une zone de jonction (16) entre la bande de matière (11) et la tête de fixation (2), collier de serrage (1, 100, 110, 120, 130) dans lequel, dans une position de serrage (PS) dudit collier de serrage (1, 100, 110, 120, 130), ladite bande de matière (11) traverse la première ouverture (30) de la tête de fixation (2) de ladite entrée (31) vers ladite sortie (32) pour que la bande de matière (11) forme une boucle (B) fermée, et la portion crantée (122) de la première face (12) de la bande de matière (11) coopère avec le cliquet (34) de la tête de fixation (2) pour autoriser le mouvement de la portion crantée (122) par rapport à la première ouverture (30) dans un unique sens et interdire son mouvement dans un sens opposé, ladite tête de fixation (2) comportant en outre une seconde ouverture (40) qui la traverse transversalement, disposée entre la zone de jonction (16) et la première ouverture (30), de sorte qu'en position de serrage (PS) dudit collier de serrage (1, 100, 110, 120, 130), la sortie (32) de la première ouverture (30) débouche à l'intérieur de la boucle (B) et vers la seconde ouverture (40), **caractérisé en ce que** ladite tête de fixation (2) comporte une portion saillante (21) par rapport à l'axe longitudinal de la bande de matière (11), orientée vers une des première ou seconde faces (12, 13) de la bande de matière (11), et dans laquelle est disposée la première ouverture (30), **en ce que** ladite portion saillante (21) est inclinée d'un angle (A1) aigu par rapport à l'axe longitudinal de la bande de matière (11), et **en ce que** ladite première ouverture (30) comporte une paroi interne (33) inclinée du même angle (A1) formant un canal de guidage agencé pour guider la bande de matière (11) au travers de ladite seconde ouverture (40) vers l'extérieur de la boucle (B).

2. Collier de serrage selon la revendication 1, **caractérisé en ce que** la sortie (32) de la première ouverture (30) débouche dans la seconde ouverture (40).

3. Collier de serrage selon la revendication 1 ou 2, **caractérisé en ce que** la portion saillante (21) de la tête de fixation (2) comporte une première paroi externe (211) inclinée et située du côté de l'une des première ou seconde faces (12, 13), et **en ce qu'**en position de serrage (PS) la première paroi externe (211) est située à l'extérieur de la boucle (B) et épouse sensiblement la forme de la boucle (B).

4. Collier de serrage selon la revendication 3, **caractérisé en ce que** la portion saillante (21) de la tête de fixation (2) comporte une seconde paroi externe (212), opposée à la première paroi externe (211), orientée vers l'autre des première et seconde faces (12, 13) de la bande de matière (11), et **en ce qu'**en position de serrage (PS) la seconde paroi externe (212) fait saillie à l'intérieur de la boucle (B).

5. Collier de serrage selon l'une quelconque des revendications précédentes, **caractérisé en ce que** la paroi interne (33) de la première ouverture (30) comporte ledit cliquet (34).

6. Collier de serrage selon l'une quelconque des revendications précédentes, **caractérisé en ce que** la tête de fixation (2) comporte une portion plane (20) disposée entre la zone de jonction (16) et la portion saillante (21), dans le plan de la bande de matière (11) et dans laquelle est ménagée la seconde ouverture (40).

7. Collier de serrage selon l'une quelconque des revendications précédentes, **caractérisé en ce que** ledit élément d'insertion (15) comporte une portion inclinée (151), qui est inclinée d'un angle (A2) obtus par rapport à l'axe longitudinal de la bande de matière (11) et orientée vers la première face (12) ou la seconde face (13) opposée à la première face (12) de la bande de matière (11).

8. Collier de serrage selon l'une quelconque des revendications précédentes, **caractérisé en ce que** la première ouverture (30) formant le canal de guidage est un canal rectiligne.

9. Collier de serrage selon l'une quelconque des revendications 3 à 8, **caractérisé en ce que** le cliquet (34) est disposé du côté de la première paroi externe (211) de la portion saillante (21), **en ce que** la portion saillante (21) de la tête de fixation (2) comporte une fente (50) longitudinale, qui s'étend sur la seconde paroi externe (212), qui est centrée par rapport à la première ouverture (30), ouvrant longitudinalement la première ouverture (30) et débouchant par une embouchure (51) dans la première ouverture (30), et **en ce que** ledit élément d'insertion (15) présente une largeur (la3) amincie par rapport à la largeur (la1) de la bande de matière (11), la largeur (la3) dudit élément d'insertion (15) étant inférieure ou égale à la largeur (la50) de la fente (50) pour pouvoir être introduit dans la première ouverture (30) de la tête de fixation (2) à travers ladite fente (50).

10. Collier de serrage selon la revendication 9, **caractérisé en ce que** la première ouverture (30) est munie au niveau de sa paroi interne (33) de deux surépaisseurs (35) disposées de part et d'autre de ladite embouchure (51) de la fente (50) et formant deux rainures (36).

11. Collier de serrage selon la revendication 10, **caractérisé en ce que** la bande de matière (11) comporte deux lèvres (16) qui s'étendent le long des bords de la bande de matière (11) pour coopérer avec les deux rainures (36) de la première ouverture (30) en position de serrage (PS).

12. Collier de serrage selon l'une quelconque des revendications précédentes, **caractérisé en ce que** la seconde face (13) de la bande de matière (11) est une face plane.

13. Collier de serrage selon l'une quelconque des revendications 1 à 8, **caractérisé en ce que** la seconde face (13) de la bande de matière (11) comporte une portion crantée (132) agencée pour coopérer avec un second cliquet (134) disposé sur la paroi interne (33) de la première ouverture (30) en regard du premier cliquet (34).

14. Collier de serrage selon l'une quelconque des revendications 3 à 12, **caractérisé en ce que** le cliquet (34) est disposé du côté de la première paroi externe (211) de la portion saillante (21) de sorte à ménager à une extrémité libre dudit cliquet (34) un espace d'insertion (340) permettant le démontage dudit collier de serrage (1, 100, 110).

15. Collier de serrage selon l'une quelconque des revendications précédentes, **caractérisé en ce qu'**en position de serrage (PS), une extrémité coupée (18) de la bande de matière (11) obtenue après découpe, est logée dans la seconde ouverture (40) pour ne pas faire saillie à l'extérieur de la boucle (B).

## Patentansprüche

1. Kabelbinder (1, 100, 110, 120, 130) mit einem flexiblen länglichen Materialstreifen (11), der eine erste Seite (12) und eine dieser entgegen gesetzte zweite Seite (13) beträgt, wobei besagte erste Seite (12) einen gerasteten Teil (122) aufweist, wobei besagter Kabelbinder (1, 100, 110, 120, 130) an einem ersten Ende (111) von Materialstreifen (11) einen Befestigungskopf (2) beträgt, der eine mit einer Sperrklinke (34) versehene erste Öffnung (30) umfasst, und der in Bezug auf die Längsachse von Materialstreifen (11) vorsteht, und, an einem zweiten Ende (112) von Materialstreifen (11), ein Einführteil (15) beträgt, das frei ist und ausgelegt ist, um in besagten Befestigungskopf (2) eingeführt zu werden, wobei erste Öffnung (30) besagten Befestigungskopf (2) in Längsrichtung zwischen einem an einem freien Ende von Befestigungskopf (2) mündenden Eingang (31) und einem in Richtung eines Verbindungsbereichs (16) zwischen Materialstreifen (11) und Befestigungskopf (2) mündenden Ausgang (32) durchdringt, Kabelbinder (1, 100, 110, 120, 130) bei dem, in einer Spannposition (PS) von besagtem Kabelbinder (1, 100, 110, 120, 130), besagter Materialstreifen (11) die erste Öffnung (30) von Verbindungskopf (2) von besagtem Eingang (31) in Richtung von besagtem Ausgang (32) durchquert, damit Materialstreifen (11) eine geschlossene Schlaufe (B) bildet, und der gerastete Teil (122) der ersten Seite (12) von Materialstreifen (11) mit Sperrklinke (34) von Befestigungskopf (2) zusammenarbeitet, um die Bewegung von gerastetem Teil (122) in Bezug auf erste Öffnung (30) nur in eine einzige Richtung zu erlauben und seine Bewegung in die entgegen gesetzte Richtung zu verbieten, wobei besagter Befestigungskopf (2) zudem eine ihn quer durchdringende zweite Öffnung (40) beträgt, die zwischen Verbindungsbereich (16) und erster Öffnung (30) angeordnet ist, so dass, in Spannposition (PS) von besagtem Kabelbinder (1, 100, 110, 120, 130), Ausgang (32) von erster Öffnung (30) im Inneren von Schlaufe (B) und in Richtung von zweiter Öffnung (40) mündet, **dadurch gekennzeichnet, dass** besagter Befestigungskopf (2) einen in Bezug auf die Längsachse von Materialstreifen (11) vorstehenden Teil (21) beträgt, der in Richtung einer der ersten oder der zweiten Seite (12, 13) von Materialstreifen (11) ausgerichtet ist, und in dem erste Öffnung (30) angeordnet ist, dadurch, dass besagter vorstehender Teil (21) um einen spitzen Winkel (A1) in Bezug auf die Längsachse von Materialstreifen (11) geneigt ist, und dadurch, dass besagte erste Öffnung (30) eine um den gleichen Winkel (A1) geneigte Innenwand (33) beträgt, die einen Führungskanal bildet, der ausgelegt ist, um Materialstreifen (11) durch besagte zweite Öffnung (40) in Richtung der Außenseite von Schlaufe (B) zu führen.

2. Kabelbinder nach Anspruch 1, **dadurch gekennzeichnet, dass** Ausgang (32) von erster Öffnung (30) in der zweiten Öffnung (40) mündet.

3. Kabelbinder nach Anspruch 1 oder 2, **dadurch gekennzeichnet, dass** vorstehender Teil (21) von Befestigungskopf (2) eine erste, geneigte und auf der Seite einer der ersten oder der zweiten Seite (12, 13) angeordnete Außenwand (211) beträgt, und dadurch, dass in Spannposition (PS) die erste Außenwand (211) sich auf der Außenseite von Schlaufe (B) befindet und sich merklich an die Form von Schlaufe (B) anpasst.

4. Kabelbinder nach Anspruch 3, **dadurch gekennzeichnet, dass** vorstehender Teil (21) von Befestigungskopf (2) eine der ersten Außenwand (211) entgegen gesetzte zweite Außenwand (212) beträgt, die in Richtung der anderen der ersten und zweiten Seite (12, 13) von Materialstreifen (11) ausgerichtet ist, und dadurch, dass in Spannposition (PS) die zweite Außenwand (212) innerhalb von Schlaufe (B) vorsteht.

5. Kabelbinder nach einem beliebigen der vorhergehenden Ansprüche, **dadurch gekennzeichnet, dass** Innenwand (33) von erster Öffnung (30) besagte Sperrklinke (34) beträgt.

6. Kabelbinder nach einem beliebigen der vorhergehenden Ansprüche, **dadurch gekennzeichnet, dass** Befestigungskopf (2) einen flachen Teil (20) beträgt, der zwischen Verbindungsbereich (16) und vorstehendem Teil (21), in der Ebene von Materialstreifen (11) angeordnet ist, und in dem zweite Öffnung (40) gebildet ist.

7. Kabelbinder nach einem beliebigen der vorhergehenden Ansprüche, **dadurch gekennzeichnet, dass** besagtes Einführteil (15) einen geneigten Teil (151) beträgt, der um einen stumpfen Winkel (A2) in Bezug auf die Längsachse von Materialstreifen (11) geneigt und in Richtung von erster Seite (12) oder von der ersten Seite (12) entgegen gesetzter zweiter Seite (13) von Materialstreifen (11) ausgerichtet ist.

8. Kabelbinder nach einem beliebigen der vorhergehenden Ansprüche, **dadurch gekennzeichnet, dass** die den Führungskanal bildende erste Öffnung (30) ein geradliniger Kanal ist.

9. Kabelbinder nach einem beliebigen der Ansprüche 3 bis 8, **dadurch gekennzeichnet, dass** Sperrklinke (34) auf der Seite der ersten Außenwand (211) von vorstehendem Teil (21) angeordnet ist, dadurch, dass vorstehender Teil (21) von Befestigungskopf (2) einen Längsschlitz (50) beträgt, der sich auf der zweiten Außenwand (212) erstreckt, der in Bezug auf erste Öffnung (30) zentriert ist, der erste Öffnung (30) in Längsrichtung öffnet und über eine Mündung (51) in erster Öffnung (30) mündet, und dadurch, dass besagtes Einführteil (15) eine Breite (la3) aufweist, die geringer als Breite (la1) von Materialstreifen (11) ist, wobei Breite (la3) von besagtem Einführteil (15) geringer oder gleich der Breite (la50) von Schlitz (50) ist, um die Einführung in erste Öffnung (30) von Befestigungskopf (2) über besagten Schlitz (50) zu ermöglichen.

10. Kabelbinder nach Anspruch 9, **dadurch gekennzeichnet, dass** erste Öffnung (30) auf ihrer Innenwand (33) mit zwei beiderseits von besagter Mündung (51) von Schlitz (50) angeordneten und zwei Rillen (36) bindenden Verdickungen (35) versehen ist.

11. Kabelbinder nach Anspruch 10, **dadurch gekennzeichnet, dass** Materialstreifen (11) zwei Lippen (16) beträgt, die sich entlang der Ränder von Materialstreifen (11) erstrecken, um in Spannposition (PS) mit den beiden Rillen (36) von erster Öffnung (30) zusammen zu arbeiten.

12. Kabelbinder nach einem beliebigen der vorhergehenden Ansprüche, **dadurch gekennzeichnet, dass** zweite Seite (13) von Materialstreifen (11) eine flache Seite ist.

13. Kabelbinder nach einem beliebigen der Ansprüche 1 bis 8, **dadurch gekennzeichnet, dass** zweite Seite (13) von Materialstreifen (11) einen gerasteten Teil (132) beträgt, der ausgelegt ist, um mit einer zweiten, auf Innenwand (33) von erster Öffnung (30) gegenüber der ersten Sperrklinke (34) angeordneten Sperrklinke (134) zusammen zu arbeiten.

14. Kabelbinder nach einem beliebigen der Ansprüche 3 bis 12, **dadurch gekennzeichnet, dass** Sperrklinke (34) auf der Seite der ersten Außenwand (211) von vorstehendem Teil (21) angeordnet ist, um an einem freien Ende von besagter Sperrklinke (34) eine Aussparung (340) zu bilden, die die Demontage von besagtem Kabelbinder (1, 100, 110) ermöglicht.

15. Kabelbinder nach einem beliebigen der vorhergehenden Ansprüche, **dadurch gekennzeichnet, dass** in Spannposition (PS) ein nach dem Schneiden erhaltenes abgeschnittenes Ende (18) von Materialstreifen (11) in zweite Öffnung (40) eingesetzt wird, um nicht außerhalb von Schlaufe (B) vor zu stehen.

## Claims

1. Cable tie (1, 100, 110, 120, 130) including an elongate flexible material strip (11) provided with a first side (12) and a second side (13), which are opposite, said first side (12) comprising a notched section (122), said cable tie (1, 100, 110, 120, 130) comprising at a first end (111) of material strip (11) a fastening head (2) comprising a first opening (30) provided with a ratchet (34) and which protrudes with respect to the longitudinal axis of material strip (11), and at a second end (112) of material strip (11) an insertion element (15) that is free and arranged to be introduced in said fastening head (2), first opening (30) passing longitudinally through said fastening head (2) between an entry (31) ending at a free end of fastening head (2) and an exit (32) ending towards a junction area (16) between material strip (11) and fastening head (2), cable tie (1, 100, 110, 120, 130) wherein, in a tying position (PS) of said cable tie (1, 100, 110, 120, 130), said material strip (11) passes through first opening (30) of fastening head (2) from said entry (31) towards said exit (32) so that material strip (11) forms a closed loop (B), and notched section (122) of first side (12) of material strip (11) cooperates with ratchet (34) of fastening head (2) to allow the movement of notched section (122) with respect to first opening (30) in a single direction and prevent its movement in an opposite direction, said fastening head (2) comprising moreover a second opening (40) that passes through it transversally, arranged between junction area (16) and first opening (30), so that, in tying position (PS) of said cable tie (1, 100, 110, 120, 130), exit (32) of first opening (30) ends inside of loop (B) and towards second opening (40), **characterized in that** said fastening head (2) comprises a section (21) protruding with respect to the longitudinal axis of material strip (11), oriented towards one of the first or second side (12, 13) of material strip (11), and in which first opening (30) is arranged, **in that** said protruding section (21) is inclined by an acute angle (A1) with respect to the longitudinal axis of material strip (11), and **in that** said first opening (30) comprises an internal wall (33) inclined by the same angle (A1) forming a guide channel arranged for guiding material strip (11) through said second opening (40) towards the outside of loop (B).

2. Cable tie according to claim 1, **characterized in that** exit (32) of first opening (30) ends in second opening (40).

3. Cable tie according to claim 1 or 2, **characterized in that** protruding section (21) of fastening head (2) comprises a first inclined external wall (211) located on the side of one of the first or second side (12, 13), and **in that**, in tying position (PS), first external wall (211) is located outside of loop (B) and substantially fits the shape of loop (B).

4. Cable tie according to claim 3, **characterized in that** protruding section (21) of fastening head (2) comprises a second external wall (212) opposite to first external wall (211), oriented towards the other of the first and second sides (12, 13) of material strip (11), and **in that**, in tying position (PS), second external wall (212) protrudes inside of loop (B).

5. Cable tie according to any of the previous claims, **characterized in that** internal wall (33) of first opening (30) comprises said ratchet (34).

6. Cable tie according to any of the previous claims, **characterized in that** fastening head (2) comprises a flat section (20) located between junction area (16) and protruding section (21), in the plane of material strip (11), and wherein second opening (40) is arranged.

7. Cable tie according to any of the previous claims, **characterized in that** said insertion element (15) comprises an inclined section (151), which is inclined by an obtuse angle (A2) with respect to the longitudinal axis of material strip (11) and oriented towards first side (12) or second side (13) opposite to first side (12) of material strip (11).

8. Cable tie according to any of the previous claims, **characterized in that** first opening (30) forming the guide channel is a rectilinear channel.

9. Cable tie according to any of claims 3 to 8, **characterized in that** ratchet (34) is arranged on the side of first external wall (211) of protruding section (21), **in that** protruding section (21) of fastening head (2) comprises a longitudinal slot (50) that extends on second external wall (212), is centered with respect to first opening (30), opens first opening (30) longitudinally and ends with an outlet (51) in first opening (30), and **in that** said insertion element (15) shows a reduced width (la3) with respect to the width (la1) of material strip (11), the width (la3) of said insertion element (15) being smaller than or equal to the width (la50) of slot (50) to allow its introduction in first opening (30) of fastening head (2) through said slot (50).

10. Cable tie according to claim 9, **characterized in that** first opening (30) is provided, on its internal wall (33), with two overthicknesses (35) located on either side of said outlet (51) of slot (50) and forming two grooves (36).

11. Cable tie according to claim 10, **characterized in that** material strip (11) comprises two lips (16) that extend along the edges of material strip (11) to cooperate with the two grooves (36) of first opening (30) in tying position (PS).

12. Cable tie according to any of the previous claims, **characterized in that** second side (13) of material strip (11) is a flat face.

13. Cable tie according to any of claims 1 to 8, **characterized in that** second side (13) of material strip (11) comprises a notched section (132) arranged to cooperate with a second ratchet (134) arranged on internal wall (33) of first opening (30) in front of first ratchet (34).

14. Cable tie according to any of claims 3 to 12, **characterized in that** ratchet (34) is arranged on the side of first external wall (211) of protruding section (21) so as to offer at a free end of said ratchet (34) an insertion space (340) allowing dismounting said cable tie (1, 100, 110).

15. Cable tie according to any of the previous claims, **characterized in that**, in tying position (PS), a cut end (18) of material strip (11) obtained after cutting off is housed in second opening (40) in order not to protrude outside of loop (B).
